# EUROPEAN PATENT APPLICATION

(11) **EP 4 455 722 A1**
(43) Date of publication of application: **30.10.2024**
(21) Application number: 22911181.0
(22) Date of filing: 19.12.2022
(51) Int. Cl.: G01S 7/4865

(54) **DISTANCE MEASURING DEVICE AND DISTANCE MEASURING METHOD**

(30) Priority: 23.12.2021 JP 2021209383
(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP); MIYANABE Shogo, Kawagoe-shi, Saitama 350-8555 (JP)
(74) Representative: Vossius & Partner Patentanwälte Rechtsanwälte mbB
(86) International application number: PCT/JP2022/046682
(87) International publication number: WO 2023/120479

(57) **Abstract**

A distance measurement apparatus (10) is an apparatus that causes a light receiving unit (180) to detect pulsed-light, which is emitted from a light source (14) and reflected by a target object (30). The distance measurement apparatus (10) includes an estimation unit (121). The estimation unit (121) estimates a peak position of the pulsed-light by using a saturation waveform that is a reception light waveform which is generated by the light receiving unit (180) that receives the pulsed-light and in which a reception light signal is partially saturated. Here, the estimation unit (121) specifies a temporary peak position by using a plurality of data points including a start point of the saturation in the saturation waveform. Further, the estimation unit (121) specifies a correction parameter based on a saturation width of the saturation waveform. The estimation unit 121 estimates the peak position of the pulsed-light by correcting the temporary peak position by using the specified correction parameter.

## Description

### TECHNICAL FIELD

The present invention relates to a distance measurement apparatus and a distance measurement method.

### BACKGROUND ART

In an apparatus that receives reflection light from a target object and performs measurement, when an intensity of the reflection light is too strong, a reception light signal is saturated, which leads to deterioration of measurement accuracy.

Patent Document 1 describes detecting a rising edge of the saturated reception signal. In the technique of Patent Document 1, a first polynomial curve is fitted to a plurality of samples including a maximum sample or the like of the reception signal, a maximum value of the first polynomial curve is determined, and a value of a predetermined ratio of the maximum value is defined as an intermediate threshold value. A point of the first polynomial curve that intersects with a magnitude of the intermediate threshold value is determined, and the plurality of samples of the reception signal close to the point are set as intermediate samples. A second polynomial curve is footed to the intermediate sample. A point at which the second polynomial and the intermediate threshold value intersect with each other is determined.

Patent Document 2 describes that, in a case where a reception signal is saturated, a signal intensity can be obtained by referring to a correlation relationship based on a pulse width of the reception signal.

### RELATED DOCUMENT

### PATENT DOCUMENT

Patent Document 1: PCT Japanese Translation Patent Publication No. 2021-518551
Patent Document 2: Japanese Unexamined Patent Publication No. 2002-22831

### SUMMARY OF THE INVENTION

### TECHNICAL PROBLEM

Meanwhile, in the technique in Patent Document 1, a processing load for detecting the rising edge is large. Further, the technique in Patent Document 2 cannot estimate a peak position in a case where the reception light signal is saturated.

An example of a problem to be solved by the present invention is to estimate a peak position of a saturated reception light waveform with a small processing load.

### SOLUTION TO PROBLEM

According to the invention described in claim 1, there is provided a distance measurement apparatus that causes a light receiving unit to detect pulsed-light emitted from a light source and reflected by a target object, the distance measurement apparatus including: an estimation unit that estimates a peak position of the pulsed-light by using a saturation waveform that is a reception light waveform which is generated by the light receiving unit that receives the pulsed-light and in which a reception light signal is partially saturated, in which the estimation unit specifies a temporary peak position by using a plurality of data points including a start point of the saturation in the saturation waveform, specifies a correction parameter based on a saturation width of the saturation waveform, and estimates the peak position of the pulsed-light by correcting the temporary peak position by using the specified correction parameter.

According to the invention described in claim 5, there is provided a distance measurement method of causing a light receiving unit to detect pulsed-light emitted from a light source and reflected by a target object, the method including: an estimation step of estimating a peak position of the pulsed-light by using a saturation waveform that is a reception light waveform which is generated by the light receiving unit that receives the pulsed-light and in which a reception light signal is partially saturated, in which in the estimation step, a temporary peak position is specified by using a plurality of data points including a start point of the saturation in the saturation waveform, a correction parameter is specified based on a saturation width of the saturation waveform, and the peak position of the pulsed-light is estimated by correcting the temporary peak position by using the specified correction parameter.

### BRIEF DESCRIPTION OF THE DRAWINGS

Fig. 1 is a diagram illustrating a functional configuration of a distance measurement apparatus according to a first embodiment.
Fig. 2 is a diagram illustrating in detail the configuration of the distance measurement apparatus according to the first embodiment.
Fig. 3 is a diagram illustrating a hardware configuration of the distance measurement apparatus according to the first embodiment.
Fig. 4 is a diagram illustrating an example of a reception light signal generated by a light receiving unit.
Fig. 5 is a waveform illustrating a saturated object peak.
Fig. 6 is a diagram illustrating a saturation width of a saturation waveform.
Fig. 7 is a diagram illustrating an example of reference information.
Fig. 8 is a diagram illustrating another example of the reference information.
Fig. 9 is a flowchart illustrating a flow of a process performed by an estimation unit according to the first embodiment.
Fig. 10 is a diagram describing the process performed by the estimation unit according to the first embodiment.
Fig. 11 is a diagram illustrating a reception light signal in a case where a target object exists at a short distance from the distance measurement apparatus.
Fig. 12 is a diagram illustrating a waveform of a saturated single object peak.
Fig. 13 is a diagram illustrating a waveform in a case where the saturated object peak and an internal reflection peak are combined by the presence of the target object at the short distance of the distance measurement apparatus.
Fig. 14 is a diagram illustrating reference information according to a second embodiment.

### DESCRIPTION OF EMBODIMENTS

Hereinafter, embodiments according to the present invention will be described by using the drawings. In all of the drawings, the same components are denoted by the same reference numerals, and description thereof is not repeated as appropriate.

### (First Embodiment)

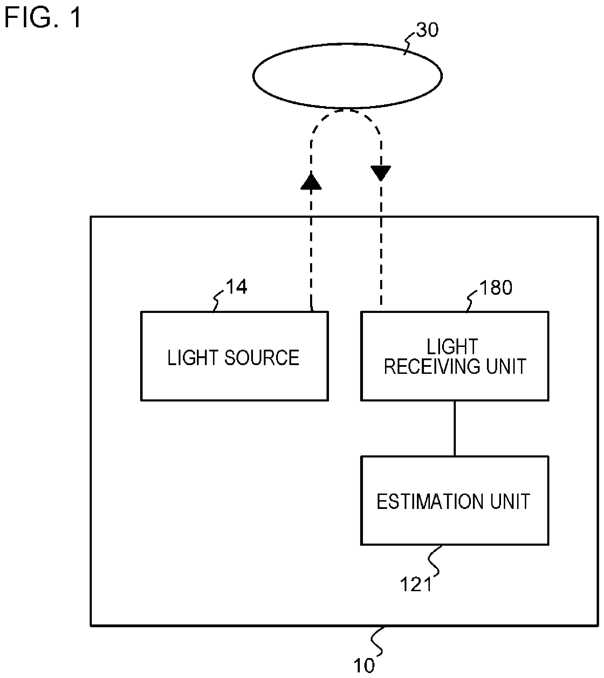

Fig. 1 is a diagram illustrating a functional configuration of a distance measurement apparatus 10 according to a first embodiment. In this diagram, a light path is schematically illustrated by a broken line arrow. The distance measurement apparatus 10 according to the present embodiment is an apparatus that causes a light receiving unit 180 to detect pulsed-light, which is emitted from a light source 14 and reflected by a target object 30. The distance measurement apparatus 10 includes an estimation unit 121. The estimation unit 121 estimates a peak position of pulsed-light by using a saturation waveform that is a reception light waveform which is generated by the light receiving unit 180 that receives the pulsed-light and in which a reception light signal is partially saturated. Here, the estimation unit 121 specifies a temporary peak position by using a plurality of data points including a start point of the saturation in the saturation waveform. Further, the estimation unit 121 specifies a correction parameter based on a saturation width of the saturation waveform. The estimation unit 121 estimates the peak position of the pulsed-light by correcting the temporary peak position by using the specified correction parameter. Details will be described below.

In the example in this diagram, the distance measurement apparatus 10 further includes the light source 14 and the light receiving unit 180.

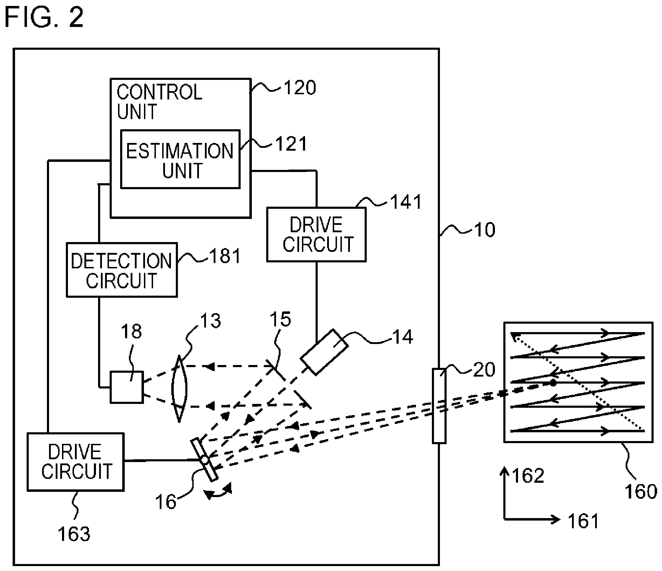

Fig. 2 is a diagram illustrating in detail the configuration of the distance measurement apparatus 10 according to the present embodiment. In this diagram, a broken line arrow schematically indicates a path of light. The configuration of the distance measurement apparatus 10 will be described in detail with reference to this diagram.

The distance measurement apparatus 10 is an apparatus that measures a distance from the distance measurement apparatus 10 to an object (target object 30) located within a scanning range 160 based on, for example, a difference between an emission timing of pulsed-light and a light reception timing of reflection light (reflected pulsed-light). The target object 30 is not particularly limited, and may be, for example, a living object, a non-living object, a moving object, a stationary object, or the like. The pulsed-light is light such as infrared light, for example. In addition, the pulsed-light is, for example, a laser pulse. The pulsed-light that is output from the light source 14 provided in the distance measurement apparatus 10 and is emitted to the outside of the distance measurement apparatus 10 through the transmissive member 20 is reflected by the object, and at least a part thereof returns toward the distance measurement apparatus 10. The reflection light passes through the transmissive member 20 again, and is incident into the distance measurement apparatus 10. The reflection light incident into the distance measurement apparatus 10 is received by the light receiving unit 180 and an intensity thereof is detected. Here, the distance measurement apparatus 10 measures a time from when pulsed-light is emitted from the light source 14 to when reflection light is detected by the light receiving unit 180. A control unit 120 provided in the distance measurement apparatus 10 calculates a distance between the distance measurement apparatus 10 and the object by using the measured time and a propagation speed of the pulsed-light. The distance measurement apparatus 10 is, for example, a laser imaging detection and ranging or laser illuminated detection and ranging (LIDAR) device or a light detection and ranging (LiDAR) device. In the example of this diagram, the estimation unit 121 is included in the control unit 120. Meanwhile, the estimation unit 121 may be provided separately from the control unit 120.

In a case where the distance measurement apparatus 10 according to the present embodiment is attached to a moving object such as a vehicle, a distance measurement result by the distance measurement apparatus 10 may be used for autonomous driving or auxiliary driving of the moving object.

The light source 14 emits pulsed-light. The light source 14 is, for example, a laser diode. The light receiving unit 180 includes a light receiving element 18 and a detection circuit 181. The light receiving element 18 receives the pulsed-light incident onto the distance measurement apparatus 10. The light receiving element 18 is a photodiode such as an avalanche photodiode (APD), for example.

In the example of this diagram, the distance measurement apparatus 10 further includes a movable mirror 16. The movable mirror 16 is, for example, a uniaxially movable or biaxially movable MEMS mirror. By changing a direction of a reflecting surface of the movable mirror 16, an emission direction of pulsed-light emitted from the distance measurement apparatus 10 can be changed. In a case where the movable mirror 16 is a biaxially movable MEMS mirror, a raster scan can be performed within a predetermined range with the pulsed-light by biaxially driving the movable mirror 16.

The control unit 120 generates point cloud data including measurement results using a plurality of pulsed-light beams. For example, in a case where a raster scan is performed within the scanning range 160, the linear scan is performed by changing the emission direction of light to a first direction 161. The point cloud data including a plurality of measurement results within the scanning range 160 can be generated by performing a plurality of linear scans while changing the emission direction of light to a second direction 162. In the example of this diagram, the first direction 161 and the second direction 162 are orthogonal to each other.

A unit of the point cloud data generated by one raster scan is called a frame. After the measurement for one frame is completed, the emission direction of light returns to an initial position, and the measurement for the next frame is performed. In this manner, frames are repeatedly generated. In the point cloud data, a distance measured by using pulsed-light is associated with information indicating the emission direction of the pulsed-light. Alternatively, the point cloud data may include three-dimensional coordinates indicating a reflection point of the pulsed-light. The control unit 120 generates the point cloud data by using the calculated distance and information indicating an angle of the movable mirror 16 when emitting each pulsed-light. The generated point cloud data may be output to the outside of the distance measurement apparatus 10, or may be held in a storage device accessible by the control unit 120.

In the example of this diagram, the distance measurement apparatus 10 further includes a perforated mirror 15 and a condenser lens 13. The pulsed-light output from the light source 14 passes through a hole of the perforated mirror 15, is reflected by the movable mirror 16, and then is emitted from the distance measurement apparatus 10. In addition, reflection light incident onto the distance measurement apparatus 10 is reflected by the movable mirror 16 and the perforated mirror 15, and then is incident onto the light receiving unit 180 through the condenser lens 13. The distance measurement apparatus 10 may further include a collimating lens, a mirror, and the like.

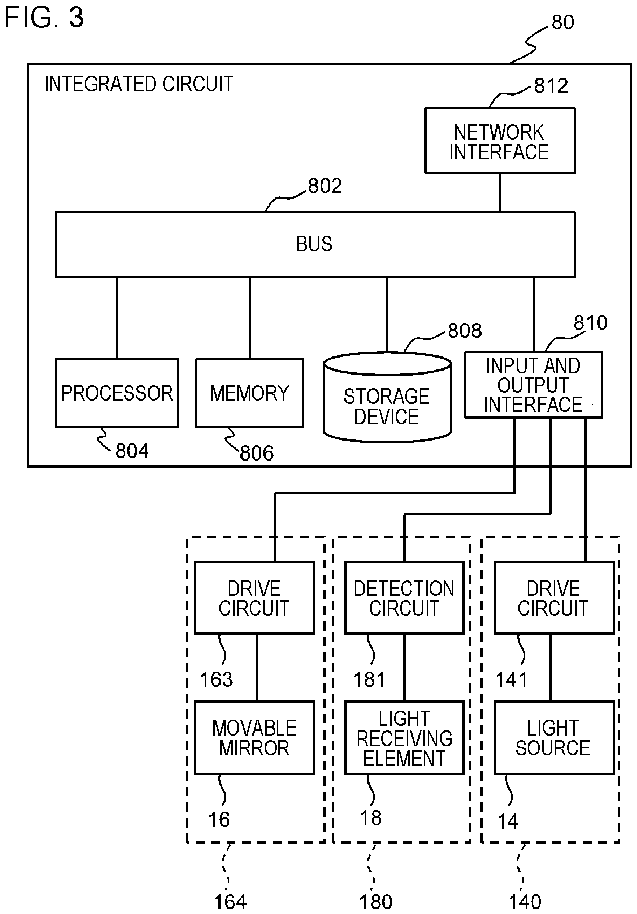

The control unit 120 can control a light emitting unit 140, the light receiving unit 180, and a movable reflection unit 164 (see Fig. 3). The light emitting unit 140, the light receiving unit 180, and the movable reflection unit 164 are included in the distance measurement apparatus 10. The light emitting unit 140 includes the light source 14 and a drive circuit 141. The light receiving unit 180 includes a light receiving element 18 and a detection circuit 181. The movable reflection unit 164 includes the movable mirror 16 and a drive circuit 163. The drive circuit 141 is a circuit for causing the light source 14 to emit light based on a control signal from the control unit 120 and includes, for example, a switching circuit or a capacitance element. The detection circuit 181 includes an I-V converter or an amplifier and outputs a signal indicating a detected intensity of light by the light receiving element 18. The control unit 120 and the estimation unit 121 acquire a reception light signal from the light receiving unit 180, and perform a process of detecting a peak for the reception light signal to detect a peak derived from reflection light from the target object 30. The control unit 120 calculates a distance from the distance measurement apparatus 10 to the target object 30 in the scanning range 160 as described above by using a light reception timing (peak position) of the detected peak and an emission timing of light. Here, in a case where the reception light signal is saturated by the pulsed-light reception, the estimation unit 121 estimates the peak position based on the saturation waveform. The control unit 120 calculates a distance from the distance measurement apparatus 10 to the target object 30 by using the peak position estimated by the estimation unit 121, that is, a light reception timing of the reflection light.

Fig. 3 is a diagram illustrating a hardware configuration of the distance measurement apparatus 10 according to the present embodiment. The control unit 120 and the estimation unit 121 are implemented by using an integrated circuit 80. The integrated circuit 80 is, for example, a system on chip (SoC).

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. Meanwhile, a method of mutually connecting the processor 804 and the like is not limited to bus connection. The processor 804 is an arithmetic processing device implemented by using a microprocessor or the like. The memory 806 is a memory implemented by using a random access memory (RAM) or the like. The storage device 808 is a storage device implemented by using a read only memory (ROM), a flash memory, or the like.

The input and output interface 810 is an interface for connecting the integrated circuit 80 to peripheral devices. In this diagram, the drive circuit 141 of the light source 14, the detection circuit 181 of the light receiving element 18, and the drive circuit 163 of the movable mirror 16 are connected to the input and output interface 810.

The network interface 812 is an interface for connecting the integrated circuit 80 to a communication network. This communication network is a communication network such as a controller area network (CAN), Ethernet, and low voltage differential signaling (LVDS), for example. A method of connecting the network interface 812 to the communication network may be a wireless connection or a wired connection.

The storage device 808 stores program modules for implementing the functions of the control unit 120 and the estimation unit 121. The processor 804 implements the functions of the control unit 120 and the estimation unit 121 by reading the program module into the memory 806 and executing the program module.

A hardware configuration of the integrated circuit 80 is not limited to the configuration illustrated in this diagram. For example, the program module may be stored in the memory 806. In this case, the integrated circuit 80 may not include the storage device 808.

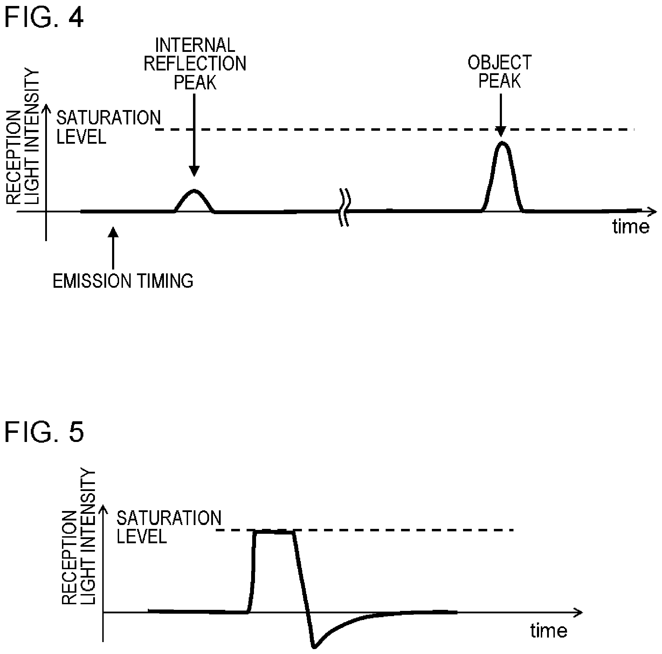

Fig. 4 is a diagram illustrating an example of a reception light signal generated by the light receiving unit 180. In this diagram, a reception light signal from one pulsed-light emission to the next pulsed-light emission is illustrated. The reception light signal is a signal output from the detection circuit 181 and input to the control unit 120. In the example of Fig. 4, as a reception light intensity by the light receiving element 18 is increased, the larger reception light signal is output in a positive direction. A polarity and the like of the reception light signal with respect to the reception light intensity are not limited to the example of this diagram. For example, the light receiving unit 180 may have a configuration in which, as the reception light intensity of the light receiving element 18 is increased, the larger reception light signal is output in a negative direction. In the following description, the polarity in a process and the like is also set as appropriate. In the example of Fig. 4, a saturation level of the light receiving unit 180 is indicated by a broken line. The saturation level of the light receiving unit 180 is the maximum signal level that can be output from the light receiving unit 180, and an intensity of light exceeding this level is not correctly reflected in the reception light signal.

The distance measurement apparatus 10 emits light output from the light source 14 to an outside of the distance measurement apparatus 10 mainly through the transmissive member 20 as illustrated in Fig. 1. Meanwhile, at least a part of the light output from the light source 14 is reflected inside the distance measurement apparatus 10, and becomes internal reflection light. The internal reflection light is received by the light receiving unit 180. This internal reflection light also includes the light reflected by the transmissive member 20. The transmissive member 20 is a light transmissive member that partitions an inside and the outside of the distance measurement apparatus 10. The transmissive member 20 is made of, for example, glass or resin. The light receiving unit 180 receives the internal reflection light and the reflection light from the target object 30.

Fig. 4 is a diagram illustrating a waveform of a reception light signal of the light receiving unit 180 in a case where the light receiving unit 180 is not saturated. The internal reflection light described above is received by the light receiving unit 180 immediately after light emission from the light source 14. On the other hand, reflection light from the target object 30 is received by the light receiving unit 180 at a timing corresponding to a distance from the distance measurement apparatus 10 to the target object 30. In a case where the target object 30 is sufficiently far from the distance measurement apparatus 10, in the reception light signal output from the light receiving unit 180, a peak obtained by receiving the internal reflection light (hereinafter, also referred to as "internal reflection peak") and a peak obtained by receiving the reflection light from the target object 30 (hereinafter, also referred to as "object peak") appear in a state of being separated from each other. That is, in this case, it can be said that a first peak in the reception light signal after emission of light is the internal reflection peak, and second and subsequent peaks are object peaks. Meanwhile, as the target object 30 becomes closer to the distance measurement apparatus 10, these peaks become closer to each other.

Fig. 5 is a waveform illustrating a saturated object peak. In a case where an intensity of reflection light from the target object 30 is high, a peak intensity by reception of the reflection light from the target object 30 exceeds a detection range of the light receiving unit 180, and a reception light signal of the light receiving unit 180 may be saturated as illustrated in this diagram. Such saturation may occur, for example, in a case where the target object 30 is close to the distance measurement apparatus 10, in a case where a light reflectivity of the target object 30 is high, or the like. In the example of this diagram, if the reflection light is received, the reception light signal rises and is saturated. If the saturation state is escaped, the signal level returns to a zero level (reference level), and a signal value having a negative polarity is further output from the detection circuit 181. The reception light signal is a signal reflecting circuit characteristics of the light receiving element 18 and the detection circuit 181, and a negative reception light signal may be output by the circuit characteristics illustrated in this diagram. The reception light signal becomes the local minimum value, and then gradually returns to the zero level.

In this manner, after the saturation, tailing occurs due to an influence of discharge of a charge accumulated in the light receiving unit 180 or the like. Therefore, a peak width of the reception light signal is increased by the occurrence of the saturation. On the other hand, it is considered that a signal up to a saturation state, that is, a rising portion of a saturation waveform correctly reflects the reception light intensity. Therefore, it can be said that a position of a start point of the saturation in the saturation waveform is well correlated with a peak position of the actual reception light pulse, that is, a light reception timing.

The estimation unit 121 specifies a temporary peak position by using a plurality of data points including a start point of the saturation, in the saturation waveform. For example, the estimation unit 121 specifies a peak position of a Gaussian curve or a secondary curve passing through the plurality of data points, as the temporary peak position. A peak position of pulsed-light is estimated by correcting the temporary peak position by using a correction parameter.

Here, a peak width of the reception light signal is increased due to the occurrence of the saturation, and the increased peak width reflects the amount of charge accumulated in the light receiving unit 180. That is, a saturation width of the saturation waveform is correlated with the amount of reception light by the light receiving unit 180. In addition, as the amount of reception light of the pulsed-light is increased, a difference between the temporary peak position and the peak position of the actual pulse is increased. Therefore, the correction parameter can be specified based on the saturation width of the saturation waveform.

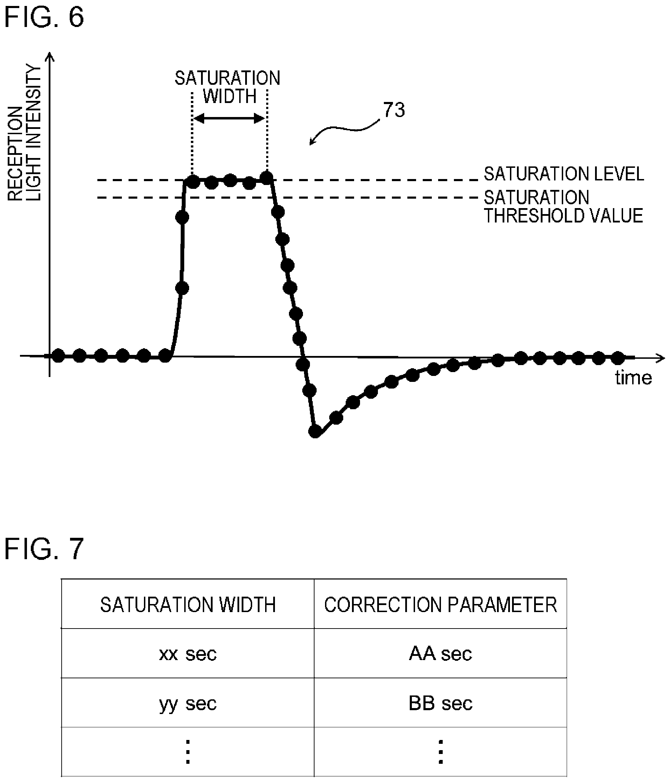

Fig. 6 is a diagram illustrating a saturation width of a saturation waveform 73. A reception light signal is configured with a plurality of time-series reception light values sampled at predetermined intervals. The reception light value indicates a reception light intensity in the light receiving unit 180. The saturation width is, for example, a width (length of time) in a state in which saturation occurs. For example, for a certain saturation waveform, a state in which a reception light value exceeds a predetermined saturation threshold value is defined as the state in which saturation occurs. The saturation threshold value is a value slightly less than a saturation level of the light receiving unit 180. For example, the estimation unit 121 sets a time point when the reception light value exceeds the predetermined saturation threshold value for the first time as a start point of the saturation, and then specifies the last reception light value exceeding the saturation threshold value as an end point of the saturation. The estimation unit 121 sets a width from the start point of the saturation to the end point of the saturation, as the saturation width of the saturation waveform. For a certain saturation waveform, the estimation unit 121 may count the number of reception light values exceeding the saturation threshold value, and set a value obtained by multiplying the counted number by a predetermined time as the saturation width.

The estimation unit 121 can specify a correction parameter by using the specified saturation width and reference information. The reference information is information in which the correction parameter is associated with each of a plurality of saturation widths. Specifically, in the reference information, the larger the saturation width, the larger the correction parameter is associated. The reference information may be a table or may be a mathematical expression capable of calculating the correction parameter from the saturation width. In the reference information, a range of the saturation width may be associated with the correction parameter. The reference information is held in advance in a storage unit (for example, the storage device 808) that is accessible from the estimation unit 121.

The reference information can be created based on a previously experimental measurement result, and held in the storage unit. For example, a first light receiving unit having the same conditions as the light receiving unit 180 of the distance measurement apparatus 10, and a second light receiving unit having a detection range larger than a detection range of the first light receiving unit are prepared. The identical pulsed-light is incident onto the first light receiving unit and the second light receiving unit to obtain a reception light waveform by each light receiving unit. At this time, the pulsed-light having an intensity such that a saturation waveform is obtained only at the first light receiving unit is made to be incident. A temporary peak position and a saturation width of the saturation waveform obtained by the first light receiving unit are specified by a process performed by the estimation unit 121. On the other hand, a peak position of a non-saturated reception light waveform obtained by the second light receiving unit, that is, an accurate peak position is specified. A difference between the temporary peak position and the accurate peak position is associated with the specified saturation width, as a correction parameter. Such association is performed by using a plurality of pieces of pulsed-light having different intensities, and the correction parameter is associated with each of a plurality of saturation widths. In a case where the reference information is a mathematical expression, the reference information may be obtained by performing fitting on a relationship between the obtained correction parameter and saturation width.

Fig. 7 is a diagram illustrating an example of reference information. In the example of this diagram, the reference information is a table, and a correction parameter is associated with each of a plurality of saturation widths.

The estimation unit 121 reads the reference information from a storage unit, and specifies the correction parameter associated with the specified saturation width in the reference information, as a correction parameter to be used for correction. For example, in a case where the reference information is a table, the estimation unit 121 specifies a correction parameter corresponding to the specified saturation width. In a case where a range of the saturation width and the correction parameter are associated in the reference information, the estimation unit 121 specifies a range to which the specified saturation width belongs and specifies a correction parameter corresponding to the range. In a case where the reference information is a mathematical expression, the estimation unit 121 obtains a correction parameter by substituting the specified saturation width into the mathematical expression.

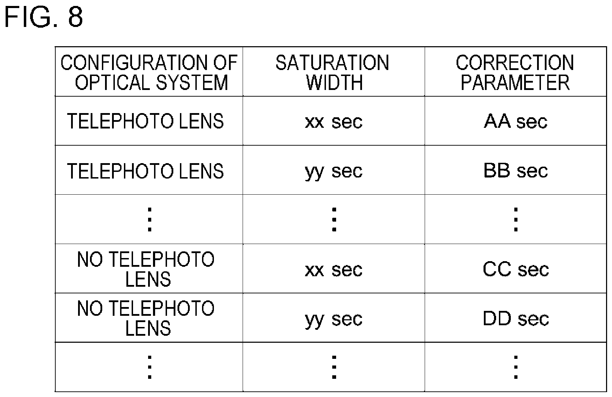

Fig. 8 is a diagram illustrating another example of the reference information. The estimation unit 121 may specify a correction parameter further based on a configuration of an optical system of the distance measurement apparatus 10. That is, in the same manner as the example of this diagram, the correction parameter may be associated with each of a plurality of combinations of the configuration of the optical system and the saturation width in the reference information. In a case where the reference information is a mathematical expression, the mathematical expression is provided for each configuration of the optical system. A saturation waveform may differ depending on the configuration of the optical system, for example, whether or not a telephoto lens is provided in a portion of the distance measurement apparatus 10 that emits and receives pulsed-light. Therefore, it is possible to improve estimation accuracy of the peak position by using the correction parameter determined for each configuration of the optical system. The reference information of this example can also be generated by performing measurement in advance under a condition having each configuration of the optical system. Information indicating the configuration of the optical system is input in advance by a user to the distance measurement apparatus 10, for example. The estimation unit 121 can acquire information indicating the configuration of the optical system that is input to the distance measurement apparatus 10, and use the information for specifying the correction parameter.

A distance measurement method according to the present embodiment will be described below. The distance measurement method according to the present embodiment is a distance measurement method in which pulsed-light emitted from the light source 14 and reflected by the target object 30 is detected by the light receiving unit 180. The present distance measurement method includes an estimation step of estimating a peak position of the pulsed-light. In the estimation step, the peak position of the pulsed-light is estimated by using a saturation waveform that is a reception light waveform which is generated by the light receiving unit 180 that receives the pulsed-light and in which a reception light signal is partially saturated. Here, in the estimation step, a temporary peak position is specified by using a plurality of data points including a start point of the saturation of the saturation waveform, and a correction parameter is specified based on a saturation width of the saturation waveform. The peak position of the pulsed-light is estimated by correcting the temporary peak position by using the specified correction parameter. Details will be described below.

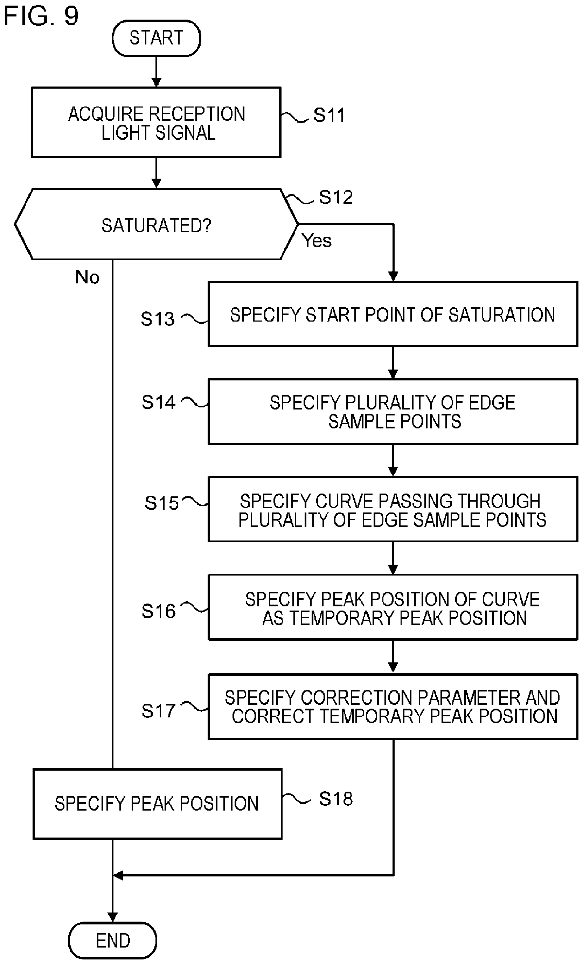

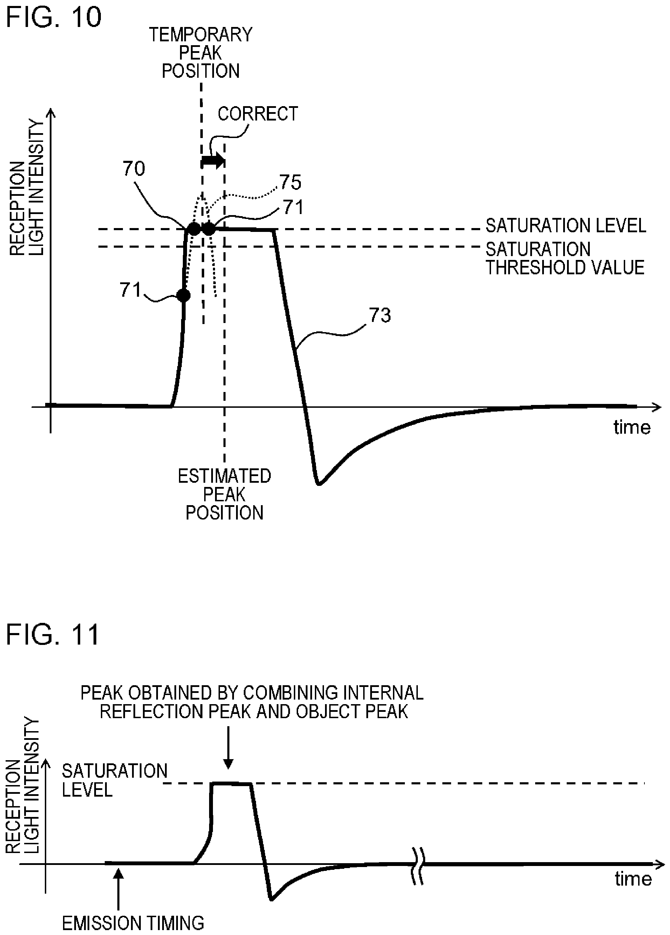

Fig. 9 is a flowchart illustrating a flow of a process performed by the estimation unit 121 according to the present embodiment. Fig. 10 is a diagram describing the process performed by the estimation unit 121 according to the present embodiment. Fig. 10 illustrates a procedure of the process using the saturation waveform 73.

In a case where pulsed-light is emitted by the distance measurement apparatus 10, the estimation unit 121 acquires a reception light signal from the light receiving unit 180 (S11). The estimation unit 121 may acquire the reception light signal from the light receiving unit 180 or may acquire the reception light signal from another portion of the control unit 120. In addition, the estimation unit 121 may read and acquire information indicating the reception light signal, which is once held in a storage unit. The estimation unit 121 acquires, for example, the reception light signal at each emission of the pulsed-light from the light source 14. In addition, the estimation unit 121 sets, for example, the reception light signal from emission of certain pulsed-light to emission of the next pulsed-light as one unit, and performs a series of processes illustrated in Fig. 9 for each unit. When acquiring the reception light signal, the estimation unit 121 determines whether or not a reception light waveform by the pulsed-light reception is saturated in the reception light signal (S12). Specifically, the estimation unit 121 determines that the reception light waveform by the pulsed-light reception is saturated in a case where a reception light value of the reception light signal exceeds a predetermined saturation threshold value (Yes in S12). On the other hand, in a case where it is not determined that the reception light waveform is saturated (No in S12), the estimation unit 121 performs a normal peak detection process by using the reception light signal to specify a peak position of a non-saturated object peak (S18). The peak position of the non-saturated object peak can be specified by using an existing method. The estimation unit 121 ends the process for the pulsed-light emission. The specifying of the peak position of the non-saturated peak is not limited to the estimation unit 121, and may be performed by the control unit 120.

When it is determined that the reception light waveform is saturated (Yes in S12), the estimation unit 121 specifies a start point of the saturation (S13). Specifically, the estimation unit 121 sets a point (reception light value) at which a reception light value of the acquired reception light signal exceeds a saturation threshold value for the first time, as a start point 70 of the saturation. Next, the estimation unit 121 specifies a plurality of edge sample points including the start point 70 of the saturation (S14). In the example of Fig. 10, a point (reception light value) 71 before and after the start point 70 and the start point 70 are combined to form the plurality of edge sample points. That is, in this example, the estimation unit 121 specifies three edge sample points. Meanwhile, the estimation unit 121 may specify four or more edge sample points. It is preferable that the plurality of edge sample points include a point one or more points before and a point one or more points after the start point 70 of the saturation.

The estimation unit 121 then specifies a curve 75 passing through the plurality of edge sample points (S15). As described above, the estimation unit 121 specifies, for example, a Gaussian curve or a secondary curve passing through the plurality of edge sample points. The curve passing through the plurality of edge sample points can be specified by using an existing fitting processing technique or the like. The estimation unit 121 specifies a peak position of the specified curve 75 as a temporary peak position (S16).

The estimation unit 121 specifies a saturation width of the saturation waveform 73 by the method described above, and further specifies a correction parameter by using the saturation width. The peak position is estimated by correcting the temporary peak position by using the specified correction parameter (S17). Specifically, the estimation unit 121 sets a position obtained by shifting the temporary peak position by the correction parameter, as an estimated peak position. For example, the estimated peak position (time from the emission timing) becomes after (longer time) than the temporary peak position. That is, the estimation unit 121 obtains the estimated peak position by adding the correction parameter to the temporary peak position. In addition, the estimation unit 121 may calculate the estimated peak position by performing an operation using the correction parameter on the temporary peak position. When the estimated peak position is obtained, the estimation unit 121 ends the process for the pulsed-light emission. The estimation unit 121 performs these processes for each emission of pulsed-light.

The control unit 120 calculates a distance from the distance measurement apparatus 10 to the target object 30 by using a specified peak position, that is, a peak position specified in S18 and a peak position estimated in S17.

The estimation unit 121 may specify a temporary peak position by using a plurality of data points including an end point of saturation, instead of specifying the temporary peak position by using a plurality of data points including a start point of the saturation. Meanwhile, as described above, the start point of the saturation more accurately reflects the position of the component of the saturated peak than the end point of the saturation. Therefore, it is preferable to use the plurality of data points including the start point of the saturation.

As above, with the present embodiment, the estimation unit 121 specifies a temporary peak position by using a plurality of data points including a start point of saturation in a saturation waveform. Further, the estimation unit 121 specifies a correction parameter based on a saturation width of the saturation waveform. The estimation unit 121 estimates the peak position of the pulsed-light by correcting the temporary peak position by using the specified correction parameter. Therefore, the peak position of the saturated reception light waveform can be estimated with a small processing load.

### (Second Embodiment)

The distance measurement apparatus 10 according to a second embodiment has the same manner as the distance measurement apparatus 10 according to the first embodiment, except that the estimation unit 121 specifies a correction parameter based on whether or not a saturation waveform is obtained from pulsed-light reception for the first time in the light receiving unit 180 after emission of pulsed-light. Details will be described below.

Fig. 11 is a diagram illustrating a reception light signal in a case where the target object 30 exists at a short distance from the distance measurement apparatus 10. In a case where the target object 30 exists at a short distance from the distance measurement apparatus 10, the reflection light has a high intensity, and the light receiving unit 180 is saturated. In addition, the distance measurement apparatus 10 and the target object 30 are close to each other, and thus the reflection light from the target object 30 is received immediately after the light is emitted from the distance measurement apparatus 10. As a result, a saturation peak, in which the saturated object peak and the internal reflection light peak are added to one peak, appears in the reception light signal.

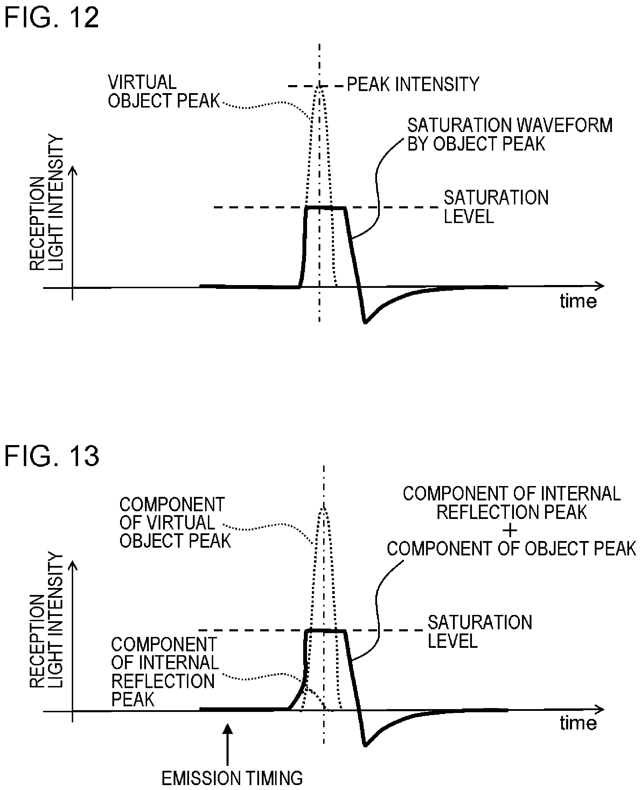

Fig. 12 is a diagram illustrating a waveform of a saturated single object peak, and Fig. 13 is a diagram illustrating a waveform in a case where the saturated object peak and an internal reflection peak are combined by the presence of the target object 30 at a short distance of the distance measurement apparatus 10. Each saturation waveform will be described with reference to Figs. 12 and 13.

In Fig. 12, a virtual object peak is indicated by a broken line superimposed on the saturation waveform. The virtual object peak is a waveform that is assumed based on a reception light intensity in the light receiving unit 180 in a case where it is assumed that the light receiving unit 180 is not saturated. In an actual reception light signal, a saturation waveform is output. The saturation waveform by such a single object peak may appear as a second peak or after a second peak after a pulse is emitted from the light source 14 and then internal reflection light is received. A rising portion of such a saturation waveform well reflects a shape and a position at a start of the rising of the virtual object peak.

In Fig. 13, a component of an internal reflection peak and a component of a virtual object peak by reflection light from the target object 30 at a short distance from the distance measurement apparatus 10 are indicated by broken lines. When the component of the internal reflection peak and the component of the virtual object peak are compared, a peak position is shifted. Specifically, the peak position of the component of the internal reflection peak is before the peak position of the component of the virtual object peak (that is, close to an emission timing of pulsed-light). This is because the reflection light from the target object 30 takes slightly more time to be received than internal reflection light. In an actual reception light signal, a saturation waveform as a result of adding up the component of the internal reflection peak and the component of the object peak is output. Such a saturation waveform by the combination of the saturated object peak and the internal reflection peak can appear as the first peak after the pulse is emitted from the light source 14. Further, in a case where the object peak and the internal reflection peak are combined, the shape of the rising portion of the saturation waveform is affected by both the component of the internal reflection peak and the component of the virtual object peak.

As described above, in a case of estimating the peak position of the saturated single object peak and a case of estimating the peak position of the object peak from the saturation waveform obtained by combining the saturated object peak and the internal reflection peak, the origins of the waveforms are different. Therefore, it is preferable to perform the correction on the temporary peak position by using different correction parameters in each of these cases. In the distance measurement apparatus 10 according to the present embodiment, the estimation unit 121 specifies the correction parameter further based on whether or not the saturation waveform is obtained from pulsed-light reception for the first time (hereinafter, referred to as "first pulsed-light reception") in the light receiving unit 180 after emission of pulsed-light. By doing so, it is possible to improve estimation accuracy of the peak position.

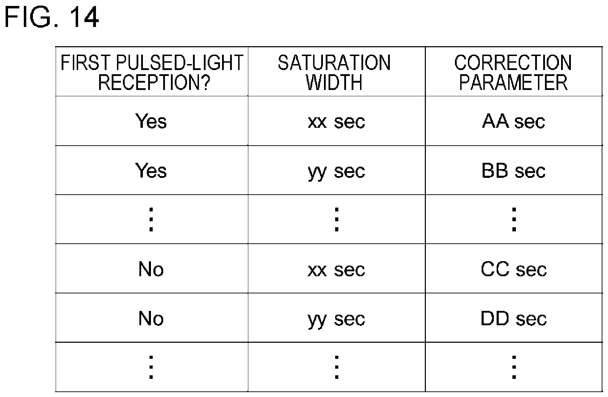

Fig. 14 is a diagram illustrating reference information according to the present embodiment. In the example of this diagram, in the reference information, a correction parameter is associated with each of a plurality of combinations of whether or not a saturation waveform is obtained from first pulsed-light reception and a saturation width. The reference information of this example can also be generated by performing experimental measurement in advance, in the same manner as the example of the first embodiment, under a condition that causes reflection from a target object at a short distance. Further, in the reference information, the correction parameter may be associated for each of a plurality of combinations of whether or not the saturation waveform is obtained from the first pulsed-light reception, the configuration of the optical system, and the saturation width, as illustrated in Fig. 8. In addition, in a case where the reference information consists of mathematical expressions, the reference information includes a mathematical expression to be used in a case where the saturation waveform is obtained from the first pulsed-light reception and a mathematical expression to be used in a case where the saturation waveform is not obtained from the first pulsed-light reception. When the saturation widths are the same, a correction parameter in a case where the saturation waveform is obtained from the first pulsed-light reception is set to be larger than a correction parameter in a case where the saturation waveform is not obtained from the first pulsed-light reception.

In the present embodiment, the estimation unit 121 uses an acquired reception light signal. It is determined whether or not a saturation waveform is obtained from first pulsed-light reception. Specifically, in a case where a reception light value exceeding a predetermined noise threshold value is continued for a first reference count or more for the first time after the emission of the pulsed-light, the estimation unit 121 determines that the reception light value exceeding the noise threshold value constitutes a peak by the first pulsed-light reception. The noise threshold value can be set to a value slightly more than a noise level of the reception light signal. In a case where the reception light value determined to be exceeding the saturation threshold value in S12 is included in a reception light value constituting a peak by the first pulsed-light reception, the estimation unit 121 determines that the saturation waveform is obtained from the first pulsed-light reception. The estimation unit 121 specifies a correction parameter by using the determination result. For example, the estimation unit 121 specifies a correction parameter corresponding to a combination of a determination result and a saturation width for a target saturation waveform in reference information, as a correction parameter to be used for correcting a temporary peak position. By using the specified correction parameter, the temporary peak position is corrected in the same manner as the first embodiment to obtain the estimated peak position.

With the present embodiment, the same operations and effects as in the first embodiment can be obtained. In addition, with the present embodiment, the estimation unit 121 specifies a correction parameter based on whether or not a saturation waveform is obtained from pulsed-light reception for the first time in the light receiving unit 180 after emission of pulsed-light. Therefore, a peak position can be estimated with higher accuracy.

### (Third Embodiment)

The distance measurement apparatus 10 according to a third embodiment has the same manner as the distance measurement apparatus 10 according to at least one of the first and second embodiments, except that based on a saturation width of a saturation waveform, a peak intensity of received pulsed-light is estimated and at least one of a reflection intensity and a reflectance of the target object 30 is estimated by using the estimated peak intensity and an estimated peak position. Details will be described below.

In a case of specifying the same target object 30 in a plurality of different frames or in a case of specifying what the target object 30 is, it is effective to use the reflectance of the target object 30. This is because the reflectance is one of indexes representing characteristics of the object. For example, in a case where the target objects 30 having substantially the same reflectance are detected at substantially the same position or detected while moving in a plurality of consecutive frames, the target objects 30 can be recognized as the same object. In addition, for example, it is possible to determine the target object 30 having a predetermined reflectance, as the target object 30 having a high probability of being a road sign or the like. The distance measurement apparatus 10 according to the present embodiment has a function of calculating and outputting a reflectance of the target object 30, based on a light reception result for each emission pulse. Alternatively, the distance measurement apparatus 10 may output information indicating a reflection intensity of the target object 30 based on the light reception result for each emission pulse. In a case where the distance measurement apparatus 10 according to the present embodiment is attached to a moving object such as a vehicle, the information output from the distance measurement apparatus 10 may be used for autonomous driving or auxiliary driving of the moving object.

The reflectance of the target object 30 can be calculated by using the reflection intensity of the target object 30 and a distance from the distance measurement apparatus 10 to the target object 30. The reflection intensity can be usually specified by using a peak intensity in a reception light signal. Meanwhile, in a case where the object peak is saturated, the peak intensity cannot be directly read from the reception light signal. On the other hand, the estimation unit 121 according to the present embodiment estimates the peak intensity of the pulsed-light by using a saturation width of a saturation waveform. Specifically, the estimation unit 121 estimates the peak intensity of the pulsed-light by using the saturation width and intensity reference information. Since there is a correlation between the saturation width and the peak intensity, the peak intensity can be estimated by this method.

The intensity reference information is information in which the estimated peak intensity is associated with each of a plurality of saturation widths. Specifically, in the intensity reference information, a larger saturation width is associated with a larger estimated peak intensity. The intensity reference information may be a table or may be a mathematical expression capable of calculating an estimation peak intensity from the saturation width. In addition, in the intensity reference information, a range of the saturation width and the estimation peak intensity may be associated. The intensity reference information is held in advance in a storage unit (for example, the storage device 808) that is accessible from the estimation unit 121.

The intensity reference information can be created based on a previously experimental measurement result, and held in the storage unit. For example, a first light receiving unit having the same conditions as the light receiving unit 180 of the distance measurement apparatus 10, and a second light receiving unit having a detection range larger than a detection range of the first light receiving unit are prepared. The identical pulsed-light is incident onto the first light receiving unit and the second light receiving unit to obtain a reception light waveform by each light receiving unit. At this time, the pulsed-light having an intensity such that a saturation waveform is obtained only at the first light receiving unit is made to be incident. A saturation width of the saturation waveform obtained by the first light receiving unit are specified by a process performed by the estimation unit 121. On the other hand, a peak intensity of a non-saturated reception light waveform obtained by the second light receiving unit is specified. The specified peak intensity and saturation width are associated with each other. Such association is performed by using a plurality of pieces of pulsed-light, and the peak intensity is associated with each of a plurality of saturation widths. In a case where the intensity reference information is a mathematical expression, the intensity reference information may be obtained by performing fitting on a relationship between the obtained peak intensity and saturation width.

The estimation unit 121 according to the present embodiment performs the detection of the saturation waveform in the reception light signal and the specifying of the saturation width of the saturation waveform, by the same method as described above in the first embodiment. As described above, the peak intensity is estimated by using the saturation width and the intensity reference information. The estimation unit 121 may further calculate a reflectance of the target object 30 by using a distance to the target object 30 calculated by using a peak position estimated for the saturation waveform and the estimated peak intensity. An existing method can be used for calculating the reflectance.

For the non-saturated peak, the control unit 120 can specify a peak intensity by an existing method, and calculate at least one of a reflection intensity and a reflectance.

With the present embodiment, the same operations and effects as in the first embodiment can be obtained. In addition, with the present embodiment, the distance measurement apparatus 10 estimates a peak intensity of pulsed-light based on a saturation width of a saturation waveform, and estimates at least one of a reflection intensity and a reflectance of the target object 30 by using the estimated peak intensity and an estimated peak position. Therefore, more information is obtained on the target object 30.

As above, the embodiments and the examples are described with reference to the drawings, but these are examples of the present invention, and various other configurations other than the embodiment and the examples described above can be adopted.

The present application claims priority based on Japanese Patent Application No. 2021-209383 filed on December 23, 2021, the entire content of which is incorporated herein by reference.

### REFERENCE SIGNS LIST

- 10: distance measurement apparatus
- 13: condenser lens
- 14: light source
- 15: perforated mirror
- 16: movable mirror
- 18: light receiving element
- 20: transmissive member
- 30: target object
- 73: saturation waveform
- 80: integrated circuit
- 120: control unit
- 121: estimation unit
- 140: light emitting unit
- 141: drive circuit
- 160: scanning range
- 163: drive circuit
- 164: movable reflection unit
- 180: light receiving unit
- 181: detection circuit

## Claims

1. A distance measurement apparatus that causes a light receiving unit to detect pulsed-light emitted from a light source and reflected by a target object, the distance measurement apparatus comprising:
an estimation unit that estimates a peak position of the pulsed-light by using a saturation waveform that is a reception light waveform which is generated by the light receiving unit that receives the pulsed-light and in which a reception light signal is partially saturated,
wherein the estimation unit
specifies a temporary peak position by using a plurality of data points including a start point of the saturation in the saturation waveform,
specifies a correction parameter based on a saturation width of the saturation waveform, and
estimates the peak position of the pulsed-light by correcting the temporary peak position by using the specified correction parameter.

2. The distance measurement apparatus according to claim 1,
wherein the estimation unit specifies the correction parameter based on whether or not the saturation waveform is obtained from pulsed-light reception for a first time by the light receiving unit after the emission of the pulsed-light.

3. The distance measurement apparatus according to claim 1 or 2,
wherein the estimation unit specifies the correction parameter based on a configuration of an optical system of the distance measurement apparatus.

4. The distance measurement apparatus according to any one of claims 1 to 3,
wherein a peak intensity of the received pulsed-light is estimated based on the saturation width of the saturation waveform, and
at least one of a reflection intensity and a reflectance of the target object is estimated by using the estimated peak intensity and the estimated peak position.

5. A distance measurement method of causing a light receiving unit to detect pulsed-light emitted from a light source and reflected by a target object, the determination method comprising:
an estimation step of estimating a peak position of the pulsed-light by using a saturation waveform that is a reception light waveform which is generated by the light receiving unit that receives the pulsed-light and in which a reception light signal is partially saturated,
wherein in the estimation step,
a temporary peak position is specified by using a plurality of data points including a start point of the saturation in the saturation waveform,
a correction parameter is specified based on a saturation width of the saturation waveform, and
the peak position of the pulsed-light is estimated by correcting the temporary peak position by using the specified correction parameter.
